# FASCICULE DE BREVET EUROPEEN

(11) **EP 2 879 955 B1**
(45) Date de publication et mention de la délivrance du brevet: **26.02.2020**
(21) Numéro de dépôt: 13756606.3
(22) Date de dépôt: 26.07.2013
(51) Int. Cl.: B64D 33/02, F02C 7/055

(54) **ENTREE D'AIR POUR MOTEUR D'HELICOPTERE A CIRCULATION DE CONTOURNEMENT AUGMENTEE**
LUFTEINLASS FÜR HUBSCHRAUBERMOTOR MIT VERGRÖSSERTEN UMFANGSEINLASSLIPPEN
AIR INLET FOR HELICOPTER ENGINE WITH INCREASED CIRCUMFERENTIAL INTAKE LIPS

(30) Priorité: 30.07.2012 FR 1257385
(43) Date de publication de la demande: 10.06.2015
(73) Titulaire: Safran Helicopter Engines, 64510 Bordes (FR)
(72) Inventeur: JACTAT, Paul-Etienne, 64000 Pau (FR); BULOT, Nicolas, 64510 Narcastet (FR); LEBRUSQ, Pascal, 64320 Idron (FR); VERGEZ, Thierry, 64320 Lee (FR)
(74) Mandataire: Cabinet Beau de Loménie
(86) Numéro de dépôt international: PCT/FR2013/051809
(87) Numéro de publication internationale: WO 2014/020267

(56) Documents cités:
- EP-A1- 1 902 953
- FR-A1- 2 914 016
- GB-A- 1 474 390
- US-A1- 2011 001 003

## Description

### DOMAINE DE L'INVENTION

Le présent exposé concerne une entrée d'air pour moteur d'hélicoptère munie d'une grille anti-givrage offrant une circulation de contournement importante en cas de givrage.

### ETAT DE LA TECHNIQUE ANTERIEURE

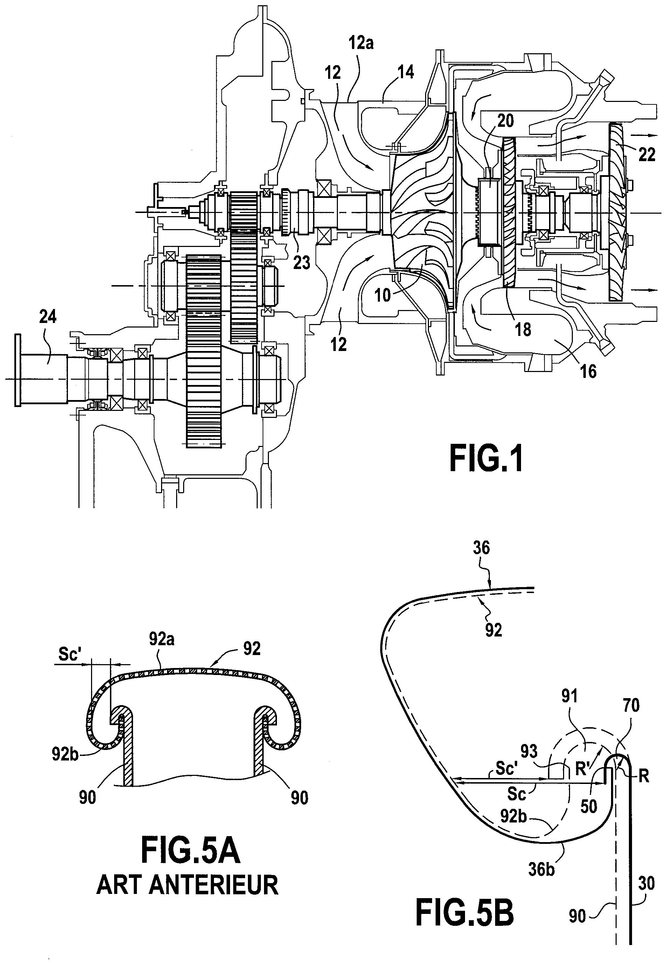

Afin de se prémunir du risque de formation de givre dans l'entrée d'air et le passage d'alimentation du moteur lors du fonctionnement en conditions givrantes, les entrées d'air actuelles sont munies d'une grille anti-givrage recouvrant entièrement l'ouverture d'entrée de l'air dans la turbine. C'est notamment le cas sur la turbine TM-333 de Turbomeca comme cela est représenté sur la FIG 5A. Grâce à cette dernière, le givrage éventuel se forme sur la surface externe 92a de la grille 92 plutôt que dans l'entrée d'air elle-même ou le passage d'alimentation en air. Une portion interne 92b de la grille 92 est alors prévue pour permettre une circulation de contournement lorsque la surface externe 92a de la grille 92 est givrée.

Toutefois, dans les moteurs actuels, les lèvres 90 de l'entrée d'air sur lesquelles est montée la grille anti-givrage 92 sont généralement usinées dans la masse, comme dans le cas de la turbine TM-333, ou réalisées en composite, voir le document EP 1 902 953, et sont donc particulièrement encombrantes : compte tenu de l'environnement très contraint autour de l'entrée d'air, il se trouve alors que la section de contournement Sc' disponible lorsque la surface externe 92a de la grille 92 est givrée est réduite ce qui limite le débit d'air en cas de givrage.

En outre, tant les modèles usinés dans la masse que les modèles en composite soulèvent des difficultés d'assemblage. En particulier, dans le cas du composite, les bordures de la grille sont collées sur un profilé qui est à son tour collé sur les lèvres composites : outre la complexité d'un tel assemblage, la mise en œuvre du collage de matériaux composites est à ce jour délicate.

Il existe donc un réel besoin pour une entrée d'air pour moteur d'hélicoptère offrant une circulation de contournement importante en cas de givrage et qui soit dépourvue des inconvénients inhérents aux entrées d'air connues précitées.

### PRESENTATION DE L'INVENTION

Le présent exposé concerne une entrée d'air pour moteur d'hélicoptère à turbine à gaz ayant un compresseur et un passage d'alimentation du compresseur en air s'ouvrant à son extrémité amont par ladite entrée d'air, cette entrée d'air comprenant des lèvres d'entrée d'air, et une grille anti-givrage montée sur des extrémités externes des lèvres d'entrée d'air et s'interposant dans la circulation d'air pénétrant dans l'entrée d'air, et dans lequel au moins une lèvre d'entrée d'air est formée par une tôle métallique fine.

Grâce à l'emploi d'une tôle fine pour réaliser ladite lèvre d'entrée, on dispose d'une lèvre d'entrée de très faible épaisseur ce qui laisse, à encombrement extérieur donné, un volume libre important pour prévoir une section de contournement importante au sein de la grille anti-givrage. Ainsi, en cas de givrage de la surface externe de la grille, une portion de grille de taille suffisante est disponible pour permettre une circulation de contournement dont le débit d'air n'est que peu réduit par rapport aux conditions normales de fonctionnement.

En particulier, l'utilisation d'une tôle fine, offrant de très bonnes propriétés de formage, permet de réaliser des géométries complexes et compactes, une telle tôle autorisant notamment des rayons de courbures très faibles. Ainsi, l'assemblage de la grille sur la lèvre d'entrée d'air s'en trouve facilité : une plus grande proximité entre la grille et la lèvre, et donc une plus grande compacité, est notamment rendue possible. L'usage d'une tôle fine permet en outre d'utiliser certaines techniques de fixation, telle la soudure, qui ne seraient pas possible avec d'autres matériaux.

En outre, la tôle fine apporte l'avantage d'une masse réduite, ce qui permet de réduire les coûts d'exploitation par la diminution de la consommation de carburant du moteur. Dans certains modes de réalisation, ladite tôle métallique fine formant ladite au moins une lèvre d'entrée d'air possède une épaisseur inférieure à 1,5 mm, de préférence inférieure à 0,8 mm.

Selon l'invention, l'extrémité externe de ladite au moins une lèvre d'entrée d'air est recourbée en U vers l'extérieur et la bordure de la grille anti-givrage s'engage dans l'espace en U ainsi défini. Grâce aux propriétés de formage de la tôle, il est possible de définir un espace en U très resserré et bien adapté aux dimensions de la bordure de la grille. En outre, grâce à ces propriétés de formage, un tel espace en U peut être formé au plus près de la lèvre elle-même, ce qui permet de libérer un espace transversal important pouvant contribuer à l'augmentation de la section de contournement.

Dans certains modes de réalisation, la bordure de la grille anti-givrage épouse les parois de l'espace en U défini par la lèvre d'entrée. Ceci peut permettre notamment de sertir la bordure de la grille dans cet espace en U ou de les assembler par emboutissage.

Dans certains modes de réalisation, la bordure de la grille anti-givrage est munie de pattes de fixation fixées sur ladite au moins une lèvre d'entrée d'air. Cette solution d'assemblage, permise par la compacité et la proximité issues des propriétés de formage de la tôle, offre les avantages de la simplicité et de la fiabilité. De telles pattes de fixation peuvent être prévues à intervalle régulier, ou non, tout le long de la lèvre d'entrée d'air.

Dans certains modes de réalisation, la bordure de la grille anti-givrage est munie d'un cordon de fixation continu fixé sur ladite au moins une lèvre d'entrée d'air. Cette solution d'assemblage permet une fixation tout le long d'un tronçon ou de la totalité de la lèvre.

Dans certains modes de réalisation, la bordure de la grille anti-givrage est fixée sur ladite au moins une lèvre d'entrée d'air par des soudures. Cette fixation est fiable et durable.

Dans d'autres modes de réalisation, la bordure de la grille anti-givrage est fixée sur ladite au moins une lèvre d'entrée d'air par des brasures, des points de colle, des sertissages ou encore des rivets.

Dans certains modes de réalisation, la fixation de la grille anti-givrage sur ladite au moins une lèvre d'entrée d'air est exempte de joint de colle. La difficulté de mise en œuvre de cette technique est ainsi évitée.

Dans certains modes de réalisation, la bordure de grille est une pièce distincte du corps de la grille anti-givrage, cette bordure de grille étant fixée sur le corps de grille. Cette solution permet d'adapter facilement une interface de fixation, spécialement conçue pour assurer la liaison et être fixée sur la lèvre d'entrée d'air, sur une grille anti-givrage conformée dans le seul but de prévenir le givrage et d'offrir une large section de contournement. En particulier, le matériau de la bordure peut être différent de celui du corps de la grille : par exemple, la bordure peut être en plastique lorsque le corps de la grille est en métal.

Dans certains modes de réalisation, la bordure de grille est fixée sur le corps de la grille anti-givrage par des brasures.

Dans certains modes de réalisation, la lèvre d'entrée d'air est réalisée en une seule pièce sur un secteur angulaire supérieur à 90°, de préférence égal à 180°.

Dans certains modes de réalisation, les deux lèvres d'entrée d'air sont formées par des tôles métalliques fines.

Dans certains modes de réalisation, l'entrée d'air est du type radial. Dans d'autres modes de réalisation, l'entrée d'air est du type axial.

Le présent exposé concerne également un moteur d'hélicoptère à turbine à gaz muni d'une entrée d'air selon l'un quelconque des modes de réalisation précédents.

Les caractéristiques et avantages précités, ainsi que d'autres, apparaîtront à la lecture de la description détaillée qui suit d'exemples de réalisation de l'entrée d'air proposée. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue schématique d'ensemble d'un moteur d'hélicoptère.
La FIG 2 est une vue partielle en coupe d'une entrée d'air selon l'invention.
La FIG 3 est une vue partielle en perspective de l'entrée d'air de la FIG 2.
La FIG 4 est une vue schématique agrandie de l'entrée d'air de la FIG 2 illustrant la fixation de la grille anti-givrage sur les lèvres de l'entrée d'air.
La FIG 5A est une vue d'une entrée d'air de l'art antérieur.
La FIG 5B est un croquis illustrant schématiquement le gain de section de contournement offert par une entrée d'air selon l'invention vis-à-vis d'une entrée d'air de l'art antérieur.

### DESCRIPTION DETAILLEE D'EXEMPLE(S) DE REALISATION

Afin de rendre plus concrète l'invention, un exemple d'entrée d'air selon l'invention est décrit en détail ci-après, en référence aux dessins annexés. Il est rappelé que l'invention ne se limite pas à cet exemple.

La FIG 1 montre de façon schématique un moteur d'hélicoptère à turbine à gaz comprenant un étage de compresseur 10 (par exemple compresseur centrifuge) recevant de l'air extérieur par un passage annulaire 12 d'alimentation en air. A son extrémité amont, le passage 12 s'ouvre par une ouverture extérieure annulaire 12a délimitée par un carter métallique 14 du moteur. Le carter 14 définit aussi les parois du passage 12. Une chambre de combustion annulaire 16, par exemple à flux inversé, est munie d'injecteurs (non représentés) alimentés en carburant et en flux d'air primaire issu du compresseur 10. Les gaz de combustion issus de la chambre 16 entrent dans une turbine 18 d'entrainement du compresseur 10, reliée à celui-ci par un arbre 20, et un turbine de puissance 22 (par exemple à un seul étage) reliée par un arbre 23 à un train d'engrenages qui fournit une puissance mécanique à un arbre de sortie 24, les arbres 20 et 23 étant coaxiaux.

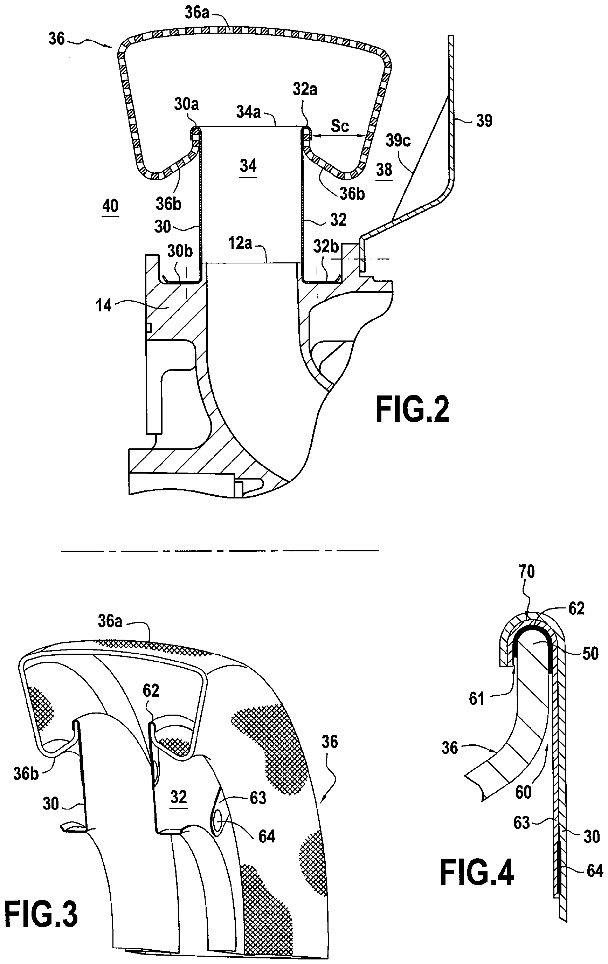

Comme le montre la FIG 2, deux lèvres 30, 32 (non représentées sur la FIG 1) définissent une entrée d'air 34 pour le passage 12. Les lèvres 30, 32 sont formées par deux tôles fines annulaires respectives qui, à une extrémité interne, se raccordent à l'extrémité amont du passage 12 de part et d'autre de l'ouverture 12a le long de celle-ci. Dans cet exemple, les tôles métalliques formant les lèvres 30, 32 sont en métal soudable, par exemple en acier inox, et possèdent une épaisseur de l'ordre de 0,6mm. A leur autre extrémité, ou extrémité externe, chaque lèvre 30, 32 présente un rebord 30a, 32a recourbé en U vers l'extérieur qui forme donc un espace en U 70. À leur extrémité interne, les lèvres 30,32 peuvent présenter des pattes ou une collerette 30b, 32b, recourbées sensiblement à 90°, permettant leur fixation sur le carter 14.

L'extrémité 34a de l'entrée d'air 34, définie par les rebords 30a, 32a, est couverte par une grille anti-givrage 36 en métal formable et résistant, par exemple en acier inox, aux rebords recourbés vers les lèvres 30, 32 dont les extrémités s'engagent dans les espaces en U 70 des rebords 30a, 32a. La grille 36 a pour objet d'éviter la formation de givre dans l'entrée d'air 34 et le passage d'alimentation 12, un givrage éventuel se formant sur la surface externe 36a de la grille 36. Un canal de contournement annulaire 38 est alors prévu pour alimenter suffisamment le passage 12 en air en dépit du givrage de la surface externe 36a de la grille 36. Le canal 38 est délimité d'un côté par une paroi annulaire de guidage coudée 39, ou plénum, munie de nervures de rigidification 39a et solidaire du carter 14. La paroi 39 est située en regard d'une lèvre de l'entrée d'air, par exemple la lèvre 32, qui délimite l'autre côté du canal 38. Un deuxième canal de contournement 40 analogue est également prévu du côté de l'autre lèvre 30 (le plénum n'est toutefois pas représenté pour ne pas alourdir les dessins). Les rebords recourbés de la grille anti-givrage 36 définissent une surface interne de contournement 36b de chaque côté de l'entrée d'air 34, tournée vers le carter 14 et s'ouvrant donc dans le canal de contournement 38 ou 40, qui permet l'admission d'une circulation d'air de contournement lorsque la surface externe 36a de la grille 36 est givrée. La section de contournement Sc, définie transversalement entre la lèvre 30, 32 et la grille anti-givrage 36, détermine le débit maximal de cette circulation de contournement.

On note sur la FIG 3 que chaque lèvre 30, 32 peut être réalisée en une seule pièce sur un secteur angulaire important, typiquement supérieur à 90°. Dans cet exemple de réalisation, l'entrée d'air 34 comprend deux lèvres amont 30, s'étendant chacune sur 180°, qui sont accolées l'une à l'autre pour former l'entrée d'air 34 sur 360° ; de manière analogue, l'entrée d'air 34 comprend également deux lèvres aval 32 s'étendant chacune sur 180°. A titre incident, on note que les lèvres 30, 32 possèdent dans cet exemple de réalisation un profil en coupe sensiblement rectiligne entre leurs rebords 30a, 32a et leurs pattes ou collerettes 30b, 32b. Toutefois, dans d'autres exemples de réalisation, ce profil pourrait être courbe pour l'une et/ou pour l'autre des lèvres 30, 32.

Les FIG 3 et 4 permettent de mieux visualiser la manière dont est assemblée la grille 36 sur les lèvres 30, 32. Ainsi que l'on peut le voir, les bords d'extrémité latérale 50 de la grille 36 sont recourbés vers l'espace en U 70 de chaque lèvre 30, 32 ; une bordure 60 est montée le long de chacun de ces bords 50 pour servir d'interface de fixation entre la grille 36 et les lèvres 30, 32.

Cette bordure 60 prend la forme d'un profilé en U, réalisé dans le même métal que la lèvre 30 ou 32, s'étendant circonférentiellement tout le long du bord 50 de la grille 36 formant ainsi une gorge 61 dans laquelle le bord d'extrémité latérale 50 de la grille 36 vient se loger : il y est fixé par des brasures 62.

A intervalles réguliers, cette bordure 60 présente également des pattes de fixation 63 qui s'étendent radialement, dans le prolongement du bord intérieur de la gorge 61, en direction du carter 14. De cette manière, lorsque le bord 50 de la grille 36 est fixé dans la gorge 61 de la bordure 60 et que la bordure 60 est logée dans l'espace en U 70 de la lèvre 30, 32, les pattes de fixation 63 s'étendent le long de la paroi extérieure de la lèvre 30, 32. Les pattes de fixation 63 sont alors fixées contre la paroi de la lèvre 30, 32 grâce à des points de soudure 64. Les pattes de fixation 63 ont une longueur suffisante pour descendre le long des lèvres 30, 32 à un niveau plus bas que celui de la surface interne de contournement 36b de la grille anti-givrage 36 de manière à permettre le passage de l'outillage au moment de l'assemblage de la grille 36 sur les lèvres 30, 32.

Grâce à l'emploi de tôles fines, les lèvres 30, 32 sont elles-mêmes très peu encombrantes et un assemblage très compact de la grille 36 sur les lèvres 30, 32 est possible. A encombrement extérieur donné, il est ainsi possible de prévoir une section de contournement Sc importante.

La FIG 5B illustre schématiquement le gain permis par une telle entrée d'air vis-à-vis d'une entrée d'air classique de l'art antérieur. Sur cette figure, une entrée d'air selon l'invention est représentée schématiquement en trait plein tandis qu'une entrée d'air de l'art antérieur est représentée en pointillés.

Dans l'entrée d'air antérieure, les lèvres 90 usinées dans la masse ou en composite sont plus épaisses. En outre, le formage du matériau est mal aisé de telle sorte que l'espace en U 91 formé par le rebord des lèvres 90 et dans lequel se loge le bord d'extrémité latérale 93 de la grille 92 présente un rayon de courbure R' important, traditionnellement de l'ordre de 5 à 10 mm. Ainsi, dans l'entrée d'air antérieure, la section de contournement Sc' entre la lèvre 90 et la grille 92 est réduite.

En revanche, dans l'entrée d'air selon l'invention, les lèvres 30, 32 sont plus fines et forment un espace en U 70 présentant un rayon de courbure R beaucoup plus faible grâce aux bonnes propriétés de formage des tôles : on peut ainsi obtenir un rayon de courbure R de l'ordre de, ou inférieur à, 2 mm. Dès lors, le bord d'extrémité latérale 50 de la grille 36 peut être monté sur les lèvres 30, 32 à beaucoup plus grande proximité des parois des lèvres 30, 32, c'est-à-dire de manière bien plus proche du plan médian de l'entrée d'air. Ainsi, dans l'entrée d'air selon l'invention, la section de contournement Sc entre les lèvres 30, 32 et la grille 36 est plus importante que dans le cas de l'entrée d'air antérieure.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

En particulier, dans la description détaillée qui précède, les lèvres d'entrée d'air s'étendent le long de l'ouverture annulaire 12a du passage d'alimentation en air sur toute la périphérie du moteur : l'invention est toutefois aussi applicable au cas où l'ouverture extérieure du passage d'alimentation en air s'étend sur une partie seulement de la périphérie du moteur. De même, l'invention est également applicable au cas d'une ouverture extérieure axiale du passage d'alimentation en air et non radiale. En outre, l'exemple de l'hélicoptère a été employé jusqu'ici mais il va de soi que cette invention est transposable à toute turbine à gaz munie d'une entrée d'air équipée d'une grille à dispositif de contournement.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Entrée d'air pour moteur d'hélicoptère à turbine à gaz ayant un compresseur (10) et un passage d'alimentation (12) du compresseur (10) en air, l'entrée d'air (34) étant prévue pour être disposée à l'extrémité amont dudit passage d'alimentation (12), cette entrée d'air comprenant
des lèvres d'entrée d'air (30, 32), et
une grille anti-givrage (36) montée sur des extrémités externes (30a, 32a) des lèvres d'entrée d'air (30, 32) et s'interposant dans la circulation d'air pénétrant dans l'entrée d'air (34), et l'extrémité externe (30a, 32a) d'au moins une desdites lèvres d'entrée d'air (30, 32) étant recourbée en U et une bordure (60) de la grille anti-givrage (36) s'engageant dans l'espace en U (70) ainsi défini, **caractérisée en ce que** ladite au moins une desdites lèvres d'entrée d'air est formée par une tôle métallique fine.

2. Entrée d'air selon la revendication 1, **caractérisée en ce que** ladite tôle métallique fine formant ladite au moins une lèvre d'entrée d'air (30, 32) possède une épaisseur inférieure à 1,5 mm, de préférence inférieure à 0,8 mm.

3. Entrée d'air selon la revendication 1 ou 2, **caractérisée en ce que** la bordure (60) de la grille anti-givrage (36) est munie de pattes de fixation (63) fixées sur ladite au moins une lèvre d'entrée d'air (30, 32).

4. Entrée d'air selon l'une quelconque des revendications 1 à 3, **caractérisée en ce que** la bordure (60) de la grille anti-givrage (36) est munie d'un cordon de fixation continu fixé sur ladite au moins une lèvre d'entrée d'air (30, 32).

5. Entrée d'air selon l'une quelconque des revendications 1 à 4, **caractérisée en ce que** la bordure (60) de la grille anti-givrage (36) est fixée sur ladite au moins une lèvre d'entrée d'air (30, 32) par des soudures (64).

6. Entrée d'air selon l'une quelconque des revendications 1 à 5, **caractérisée en ce que** la fixation de la grille anti-givrage (36) sur ladite au moins une lèvre d'entrée d'air (30, 32) est exempte de joint de colle.

7. Entrée d'air selon l'une quelconque des revendications 1 à 6, **caractérisée en ce que** la bordure (60) de grille anti-givrage est une pièce distincte du corps de la grille anti-givrage (36), cette bordure (60) de grille étant fixée sur le corps de grille (36).

8. Entrée d'air selon la revendication 7, **caractérisée en ce que** la bordure (60) de grille est fixée sur le corps de la grille anti-givrage (36) par des brasures (62).

9. Moteur d'hélicoptère à turbine à gaz muni d'une entrée d'air (34) selon l'une quelconque des revendications précédentes.

## Patentansprüche

1. Lufteinlass für ein Gasturbinen-Hubschraubertriebwerk mit einem Verdichter (10) und einem Durchgang zur Luftversorgung (12) des Verdichters (10), wobei der Lufteinlass (34) vorgesehen ist, um an dem stromaufwärtigen Ende des Versorgungsdurchgangs (12) angeordnet zu werden, wobei dieser Lufteinlass umfasst
Lufteinlasslippen (30, 32) und
ein Vereisungsschutzgitter (36), das an äußeren Enden (30a, 32a) der Lufteinlasslippen (30, 32) angebracht ist und in die Zirkulation von Luft, welche in den Lufteinlass (34) eindringt, einwirkt, und
wobei das äußere Ende (30a, 32a) von wenigstens einer der Lufteinlasslippen (30, 32) U-förmig gebogen ist und wobei ein Rand (60) des Vereisungsschutzgitters (36) in den so definierten U-förmigen Raum (70) eingreift, **dadurch gekennzeichnet, dass** die wenigstens eine der Lufteinlasslippen (30, 32) durch ein dünnes Metallblech gebildet ist.

2. Lufteinlass nach Anspruch 1, **dadurch gekennzeichnet, dass** das die wenigstens eine Lufteinlasslippe (30, 32) bildende dünne Metallblech eine Dicke von weniger als 1,5 mm, vorzugsweise von weniger als 0,8 mm aufweist.

3. Lufteinlass nach Anspruch 1 oder 2, **dadurch gekennzeichnet, dass** der Rand (60) des Vereisungsschutzgitters (36) mit Befestigungslaschen (63) versehen ist, die an der wenigstens einen Lufteinlasslippe (30, 32) befestigt sind.

4. Lufteinlass nach einem der Ansprüche 1 bis 3, **dadurch gekennzeichnet, dass** der Rand (60) des Vereisungsschutzgitters (36) mit einer durchgehenden Befestigungsschnur versehen ist, die an der wenigstens einen Lufteinlasslippe (30, 32) befestigt ist.

5. Lufteinlass nach einem der Ansprüche 1 bis 4, **dadurch gekennzeichnet, dass** der Rand (60) des Vereisungsschutzgitters (36) an der wenigstens einen Lufteinlasslippe (30, 32) durch Schweißnähte (64) befestigt ist.

6. Lufteinlass nach einem der Ansprüche 1 bis 5, **dadurch gekennzeichnet, dass** die Befestigung des Vereisungsschutzgitters (36) an der wenigstens einen Lufteinlasslippe (30, 32) keine Klebefuge aufweist.

7. Lufteinlass nach einem der Ansprüche 1 bis 6, **dadurch gekennzeichnet, dass** der Rand (60) des Vereisungsschutzgitters ein separates Teil des Körpers des Vereisungsschutzgitters (36) ist, wobei dieser Gitterrand (60) am Gitterkörper (36) befestigt ist.

8. Lufteinlass nach Anspruch 7, **dadurch gekennzeichnet, dass** der Gitterrand (60) durch Lötnähte (62) an dem Körper des Vereisungsschutzgitters (36) befestigt ist.

9. Gasturbinen-Hubschraubertriebwerk, das mit einem Lufteinlass (34) nach einem der vorhergehenden Ansprüche versehen ist.

## Claims

1. An air intake for a gas turbine helicopter engine having a compressor (10) and a passage (12) for feeding the compressor (10) with air, the air intake (34) being provided for being positioned at the upstream end of said passage (12), the air intake comprising:
• air intake lips (30, 32); and
• an anti-icing grid (36) mounted on the outer ends (30a, 32a) of the air intake lips (30, 32), being interposed in the air flow penetrating into the air intake (34); and
the outer end (30a, 32a) of at least one of said air intake lip (30, 32) having a U-shaped curve and a margin (60) of the anti-icing grid (36) engaging in the U-shaped space (70) defined in this way,
**characterized in that** said at least one of said air intake lip (30, 32) is formed by a thin metal sheet.

2. An air intake according to claim 1, **characterized in that** said thin metal sheet forming said at least one air intake lip (30, 32) possesses thickness of less than 1.5 mm, and preferably of less than 0.8 mm.

3. An air intake according to claim 1 or 2, **characterized in that** the margin (60) of the anti-icing grid (36) is provided with fastener tabs (63) that are fastened to said at least one air intake lip (30, 32).

4. An air intake according to any one of claims 1 to 3, **characterized in that** the margin (60) of the anti-icing grid (36) is provided with a continuous fastener bead fastened to said at least one air intake lip (30, 32).

5. An air intake according to any one of claims 1 to 4, **characterized in that** the margin (60) of the anti-icing grid (36) is fastened to said at least one air intake lip (30, 32) by welds (64).

6. An air intake according to any one of claims 1 to 5, **characterized in that** the fastening of said anti-icing grid (36) to said to least one air intake lip (30, 32) is devoid of adhesive bonding.

7. An air intake according to any one of claims 1 to 6, **characterized in that** the margin (60) of the anti-icing grid is a part that is separate from the body of the anti-icing grid (36), the margin (60) of the grid being fastened to the body of the grid (36).

8. An air intake according to claim 7, **characterized in that** the margin (60) of the grid is fastened to the body of the anti-icing grid (36) by brazing (62).

9. A gas turbine helicopter engine having an air intake (34) according to any preceding claim.
